# EUROPEAN PATENT APPLICATION

(11) **EP 4 632 575 A1**
(43) Date of publication of application: **15.10.2025**
(21) Application number: 25169124.2
(22) Date of filing: 08.04.2025
(51) Int. Cl.: G06F 9/50

(54) **SYSTEM AND METHOD FOR ALLOCATING COMPUTE RESOURCES IN A DISTRIBUTED DATABASE**

(30) Priority: 09.04.2024 US 202463631797 P; 01.04.2025 US 202519097299
(71) Applicant: Google LLC, Mountain View, CA 94043 (US)
(72) Inventor: O'NEILL, Alexander B., Mountain View, 94043 (US); MCERLEAN, Douglas, Mountain View, 94043 (US)
(74) Representative: Betten & Resch

(57) **Abstract**

The present disclosure provides a method for managing allocation of compute resources in a distributed database. Each request on every task is allocated a certain number of tokens when it arrives, such as by using a token bucket algorithm. This initial allocation may be the per-request maximum usage permitted in the system. This request is made to a central quota server in the region to coordinate allocations between tasks. As the task runs, the system evaluates how much of the limit the request is using, and adjusts its limit up or down to keep the quota allocation tight on the actual usage of the request. If there aren't enough tokens to keep the request active, the request can be evicted.

## Description

### CROSS-REFERENCE TO RELATED APPLICATIONS

This application claims the benefit of the filing date of U.S. Provisional Application No. 63/631,797, filed April 9, 2024 and 19/097,299 Filed April 1, 2025, the disclosure of which is hereby incorporated herein by reference.

### BACKGROUND

Cloud computing systems sometimes include a distributed data analysis engine, which operates in multiple data centers distributed globally. Each data center contains one or more servers. Users of such cloud computing systems may create organizations and projects. Within a project, the distributed data analysis engine allows users to create data sets and tables. Internally, tables are partitioned into units of data replication, called storage sets. Each storage set corresponds to one or more files stored on a server. While users typically query their own data sets, it is also possible for one user to share data sets with another user or make them publicly available to many users. Multiple data sets may be joined together at query time, which potentially requires the system to read data from a large number of distinct data sets, possibly belonging to arbitrary users.

When evaluating a query, the distributed data analysis engine executes a set of processes within a specific server. These processes read the storage set files described above. In some scenarios, multiple users share a server or the resources of a distributed computing environment in general. If a given user has a number of queries being served at the same time, this can consume most of the shared computing resources, creating latency for queries of other users because of the reduction in available computing resources.

### BRIEF SUMMARY

The present disclosure provides a method for managing allocation of compute resources in a distributed database. Each request on every task is allocated a certain number of tokens when it arrives, such as by using a token bucket algorithm. This initial allocation may be the per-request maximum usage permitted in the system. This request is made to a central quota server in the region to coordinate allocations between tasks. As the task runs, the system evaluates how much of the limit the request is using, and adjusts its limit up or down to keep the quota allocation tight on the actual usage of the request. If there aren't enough tokens to keep the request active, the request can be evicted.

### BRIEF DESCRIPTION OF THE DRAWINGS

Fig. 1 is a block diagram of an example distributed computing system according to aspects of the disclosure.
Fig. 2 is a block diagram of an example data assignment system according to aspects of the disclosure.
Figs. 3-5 are timing diagrams illustrating example scenarios for allocating compute resources to requests according to aspects of the disclosure.
Fig. 6 is an example schematic diagram illustrating snapshots of token buckets over time according to aspects of the disclosure.
Figs. 7A-7B illustrate example per-request scaling according to aspects of the disclosure.
Figs. 8A-8B illustrate example per-user scaling according to aspects of the disclosure.
Figs. 9A-9B illustrate example per-request scaling with local pooling according to aspects of the disclosure.
Fig. 10 is a flow diagram illustrating an example method according to aspects of the disclosure.

### DETAILED DESCRIPTION

In a managed not only structured query language (NoSQL) database for analytic and data storage workloads, customers can allocate servers directly to serve their data in the database. In a "serverless" compute model, compute usage may be allocated on a per-query basis, as opposed to the customer being allocated a server that can run many queries over a time period.

The present disclosure provides a mechanism for a NoSQL to prevent any one user from dominating the available resources that are shared between all users of the system, to allow fair access to all resources for all users of the system. Such users may include, for example, customers that host data in the distributed database, end users requesting data that they may or may not own,etc. The quota can be expressed in terms of resources used over time, as each request may use different amounts of resources when querying the database. For example, while one request may be short-lived and do a quick lookup, another request may be a larger request that scans a large portion of the database doing complex filtering.

The system works across many servers that service requests, across many cells and data centers, while allowing for quick allocation and correctness. The system limits, in aggregate, the total amount of resources used on NoSQL servers when servicing requests between tasks, across multiple cells in a cloud region.

In this system, each request on every task is allocated a certain number of tokens when it arrives, such as by using a token bucket algorithm. One token may represent a mixture of compute units, RAM, and disk time. The compute units may be normalized CPU limits, such as effective CPU limits normalized across different types of machines. This initial allocation may be the per-request maximum usage permitted in the system. This request is made to a central quota service in the region to coordinate allocations between tasks, but the quota service may be different between users of the system (e.g. for load balancing). As the task runs, the system evaluates how much of the limit the request is using, and adjusts its limit up or down to keep the quota allocation tight on the actual usage of the request. If there aren't enough tokens to keep the request active, the request can be evicted.

To help with correctness, when a request is done running its token allocation can be kept on-task until the next scaling event for requests, which may be every few seconds. Those tokens can be allocated eagerly to arriving tasks to offset how many "new" tokens are needed to admit the request. For example, if request A has 50 tokens and exits, and request B arrives and needs 250 to run, request B can ask the central quota server for 200 tokens and preallocate the 50 tokens from request A towards request B. This can mean admitting more requests without asking for as much from the central quota server. This has the advantage of keeping quota allocation tight over actual usage. If every request always uses its maximum allocation, this is as good as a concurrent request quota. However, if in the system each request uses half of its maximum allocation, over time more requests could be permitted to run while the existing requests do less. In this regard, more progress of requests can be allowed compared to a strict limit on number of requests.

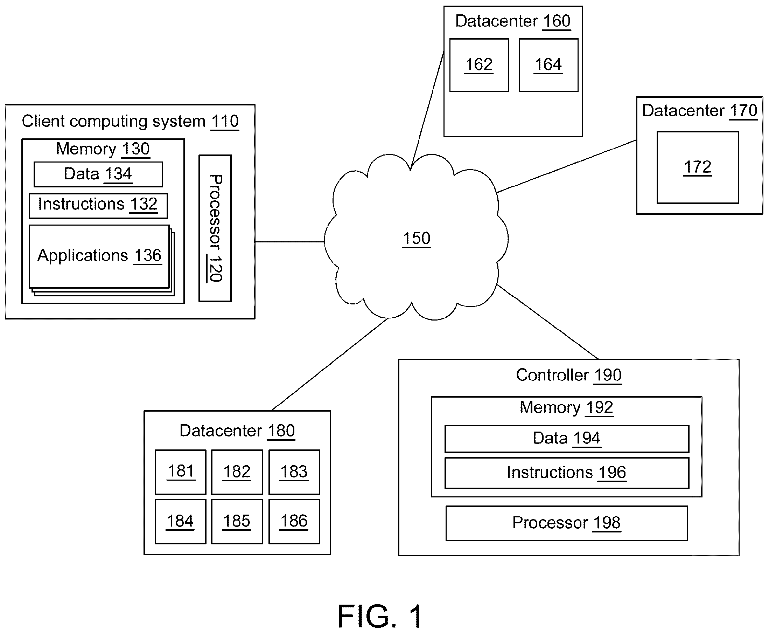

Fig. 1 illustrates an example system including a distributed computing environment. A plurality of datacenters 160, 170, 180 may be communicatively coupled, for example, over a network 150. The datacenters 160, 170, 180 may further communicate with one or more client devices, such as client 110, over the network 150. Thus, for example, the client 110 may execute operations in "the cloud." In some examples, the datacenters 160, 170, 180 may further communicate with a controller 190.

The datacenters 160-180 may be positioned a considerable distance from one another. For example, the datacenters may be positioned in various countries around the world. Each datacenter 160, 170, 180 may include one or more computing devices, such as processors, servers, shards, cells, or the like. For example, as shown in Fig. 1, datacenter 160 includes computing devices 162, 164, datacenter 170 includes computing device 172, and datacenter 180 includes computing devices 181-186. Programs may be executed across these computing devices, for example, such that some operations are executed by one or more computing devices of a first datacenter while other operations are performed by one or more computing devices of a second datacenter. In some examples, the computing devices in the various datacenters may have different capacities. For example, the different computing devices may have different processing speeds, workloads, etc. While only a few of these computing devices are shown, it should be understood that each datacenter 160, 170, 180 may include any number of computing devices, and that the number of computing devices in a first datacenter may differ from a number of computing devices in a second datacenter. Moreover, it should be understood that the number of computing devices in each datacenter 160-180 may vary over time, for example, as hardware is removed, replaced, upgraded, or expanded.

In some examples, each datacenter 160-180 may also include a number of storage devices (not shown), such as hard drives, random access memory, disks, disk arrays, tape drives, or any other types of storage devices. The datacenters 162, 172, 182 may implement any of a number of architectures and technologies, including, but not limited to, direct attached storage (DAS), network attached storage (NAS), storage area networks (SANs), fibre channel (FC), fibre channel over Ethernet (FCoE), mixed architecture networks, or the like. The datacenters may include a number of other devices in addition to the storage devices, such as cabling, routers, etc. Further, in some examples the datacenters 160-180 may be virtualized environments. Further, while only a few datacenters 160-180 are shown, numerous datacenters may be coupled over the network 150 and/or additional networks.

In some examples, the controller 190 may communicate with the computing devices in the datacenters 160-180, and may facilitate the execution of programs. For example, the controller 190 may track the capacity, status, workload, or other information of each computing device, and use such information to assign tasks. The controller 190 may include a processor 198 and memory 192, including data 194 and instructions 196, similar to the client 110 described above. In other examples, such operations may be performed by one or more of the computing devices in one of the datacenters 160-180, and an independent controller may be omitted from the system.

Each client 110 may be, for example, a computer intended for use by a person or an entity. The client 110 may have all the internal components normally found in a personal computer such as a central processing unit (CPU), CD-ROM, hard drive, and a display device, for example, a monitor having a screen, a projector, a touch-screen, a small LCD screen, a television, or another device such as an electrical device that can be operable to display information processed by processor 120, speakers, a modem and/or network interface device, user input, such as a mouse, keyboard, touch screen or microphone, and all of the components used for connecting these elements to one another. Moreover, computers in accordance with the systems and methods described herein may include devices capable of processing instructions and transmitting data to and from humans and other computers including general purpose computers, PDAs, tablets, mobile phones, smartwatches, network computers lacking local storage capability, set top boxes for televisions, and other networked devices.

The client 110 may contain a processor 120, memory 130, and other components typically present in general purpose computers. The memory 130 can store information accessible by the processor 120, including instructions 132 that can be executed by the processor 120. Memory can also include data 134 that can be retrieved, manipulated or stored by the processor 120. The memory 130 may be a type of non-transitory computer readable medium capable of storing information accessible by the processor 120, such as a hard-drive, solid state drive, tape drive, optical storage, memory card, ROM, RAM, DVD, CD-ROM, write-capable, and read-only memories. The processor 120 can be a well-known processor or other lesser-known types of processors. Alternatively, the processor 120 can be a dedicated controller such as an ASIC.

The instructions 132 can be a set of instructions executed directly, such as machine code, or indirectly, such as scripts, by the processor 120. In this regard, the terms "instructions," "steps" and "programs" can be used interchangeably herein. The instructions 132 can be stored in object code format for direct processing by the processor 120, or other types of computer language including scripts or collections of independent source code modules that are interpreted on demand or compiled in advance.

The data 134 can be retrieved, stored or modified by the processor 120 in accordance with the instructions 132. For instance, although the system and method is not limited by a particular data structure, the data 134 can be stored in computer registers, in a relational database as a table having a plurality of different fields and records, or XML documents. The data 134 can also be formatted in a computer-readable format such as, but not limited to, binary values, ASCII or Unicode. Moreover, the data 134 can include information sufficient to identify relevant information, such as numbers, descriptive text, proprietary codes, pointers, references to data stored in other memories, including other network locations, or information that is used by a function to calculate relevant data.

Applications 136 may be used for any of a variety of operations. The applications 136 may, for example, be downloaded, executable from the instructions 132, or remotely accessed. In some examples, the application may be remotely executed. For example, applications on the client device may be executed in the cloud.

Although Fig. 1 functionally illustrates the processor 120 and memory 130 as being within the same block, the processor 120 and memory 130 may actually include multiple processors and memories that may or may not be stored within the same physical housing. For example, some of the instructions 132 and data 134 can be stored on a removable CD-ROM and others within a read-only computer chip. Some or all of the instructions and data can be stored in a location physically remote from, yet still accessible by, the processor 120. Similarly, the processor 120 can actually include a collection of processors, which may or may not operate in parallel.

Client 110, datacenters 160-180, and control 190 can be capable of direct and indirect communication such as over network 150. For example, using an Internet socket, a client 110 can connect to a service operating on remote servers through an Internet protocol suite. Servers can set up listening sockets that may accept an initiating connection for sending and receiving information. The network 150, and intervening nodes, may include various configurations and protocols including the Internet, World Wide Web, intranets, virtual private networks, wide area networks, local networks, private networks using communication protocols proprietary to one or more companies, Ethernet, WiFi (e.g., 702.71, 702.71b, g, n, or other such standards), and HTTP, and various combinations of the foregoing. Such communication may be facilitated by a device capable of transmitting data to and from other computers, such as modems (e.g., dial-up, cable or fiber optic) and wireless interfaces.

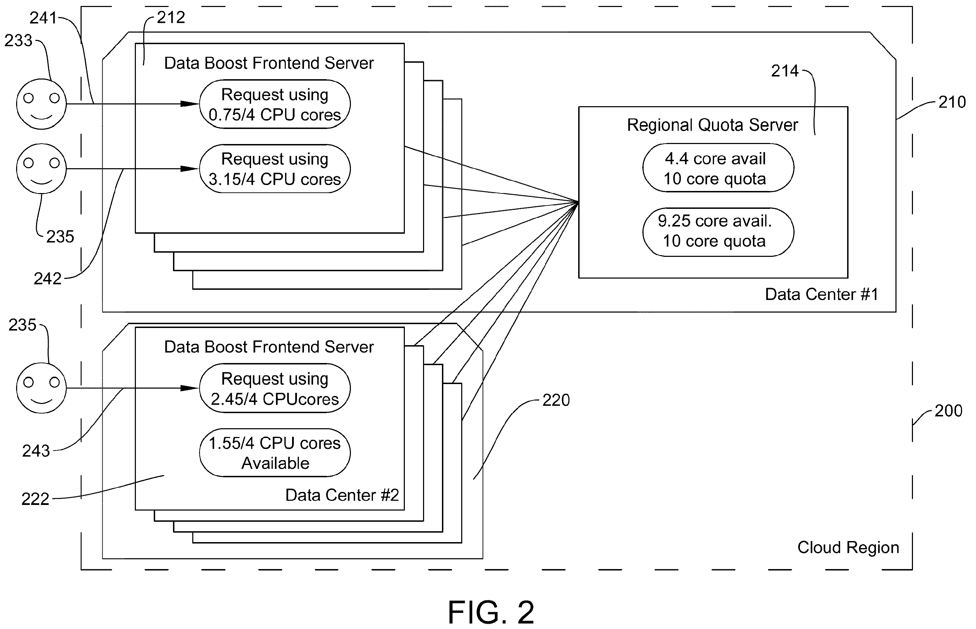

Fig. 2 illustrates an example system according to aspects of the disclosure. In this system, a cloud region 200 includes datacenters 210, 220. Each of the datacenters includes a plurality of frontend servers 212, 222, respectively. First datacenter 210 further includes a regional quota server 214. The frontend servers 212, 222 receive requests from first user 233 and second user 235. The users may be, for example, customers using the datacenters 210, 220 to host their data. For example, the users 233, 235 may have websites or applications accessed by employees, third party end users, or other. Each access may take the form of a request, such as a request for read, write, modify, or other transactions.

Each of the first and second users 233, 235 may be allocated an amount of resources. For example, the allocated resources can be represented in tokens. The first user issues a first request to access data in the distributed database, the first request requiring a first requested amount of resources. Some types of requests may require more compute resources than others to serve the request. For example, accessing large amounts of data may consume more compute resources than requests to access smaller amounts. As another example, some requests may take a longer period of time to serve than others, utilizing the compute resources for a longer time period. The amount of resources required by the first request may be determined by, for example, the frontend servers 212. The frontend server 212, upon receipt of the first request from the first user 233 and determination of the first required amount of resources to serve the request, may request an allocation from the quota server 214. The quota server may consider an allocation of resources to the first user 233 as well as a total amount of resources in the quota. In this example, the first user 233 and the second user 235 are each allocated a total of 10 cores among both datacenters 210, 220 in the region 200. While in this example the allocations are quantified in cores, in other examples the allocations may be quantified in other units, such as tokens. In a first request 241 by the first user 233, .75 cores are needed, and therefore the frontend servers 212 request the allocation from the quota server 214. Because the first user 233 has 10 cores allocated and none of presently used, the request 241 is served and the first user's 10 core quota is reduced by the .75 cores needed to serve the request, resulting in a remaining quota amount of 9.25 cores for the first user 233 while the first request is being served. After a period of time, such as a time long enough to complete serving of the first request 241, the remaining quota amount may be restored to the full quota amount of 10 cores.

As shown in this example, while the first request 241 of the first user 233 is being served, the second user 235 issues a second request 242 and a third request 243. The second request 242 is determined to require 3.15 cores while the third request 243 is determined to require 2.45 cores. Because the total amount of 10 cores allocated to the second user 235 is greater than the total requested amount of 5.6 cores, the second and third requests 242, 243 are served and the total amount allocated to the second user is reduced accordingly.

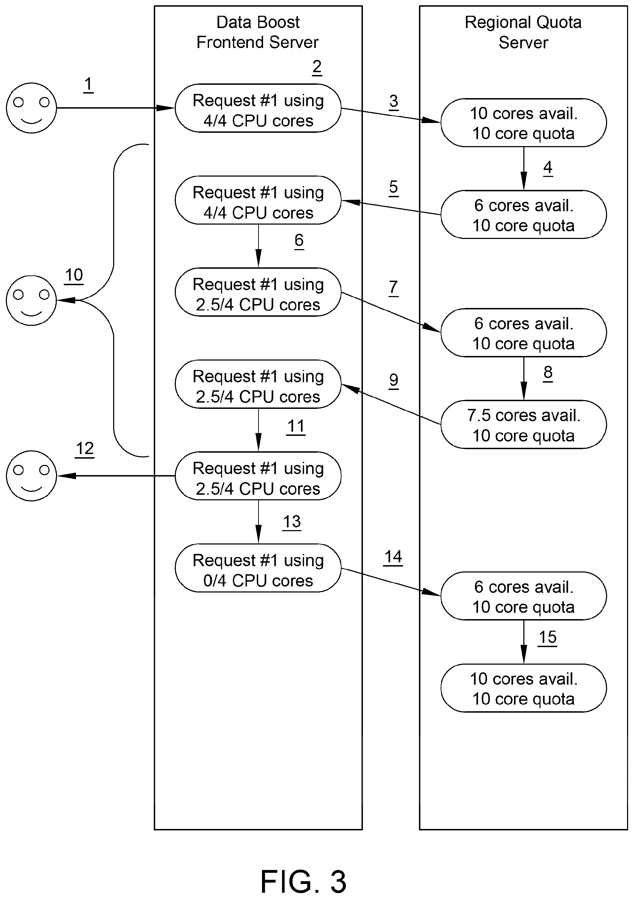

While in the example of Fig. 2 the resources requested by both users 233, 235 are available, a number of other scenarios are possible where one or more users are requesting resources at a same time. Figs. 3-5 illustrate just a few of such examples.

As shown in Fig. 3, a user issues a request, such as a read or write request, to the distributed database. The request is received by the frontend server, which may assume that the request is using all available cores allocated to a new request. In this example, 4 cores may be allocated to each new request, and therefore the frontend server assumes that the request is using all 4 cores. The frontend server confirms with the regional quota server that there is enough quota to let the request run, or serve the request. Because there are 10 cores available for all requests, and only 4 cores are requested, there is enough quota. The regional quota server deducts the requested 4 cores from the available 10 cores, resulting in 6 remaining cores being available of the 10 core quota for all requests. The regional quota server informs the frontend server that there is sufficient quota and allows the request to run. As the request is running, the frontend server may measure the core usage and determine that the request is using less compute resources than its allocated quota of 4 cores. For example, the frontend server measures 2.5 cores of usage out of the allotted 4 cores. This may be referred to as a scaling event or scaling epoch. The frontend server informs the regional quota server that the request is using less resources than allocated, and asks to change its quota allocation. The regional quota determines that there is sufficient quota to change the allocation for the first request, and makes the change. As a result, 2.5 cores are allocated to the first request and 7.5 cores are available for all other requests. The frontend server is notified of the change and allows the request to keep running. Meanwhile, while the consumption is being measured and the allocation adjusted, the request is processing data on the frontend server and sending it back to the user. When the request has finished processing data, the user may receive a final response and the request is complete. At a next time when the frontend server performs a scaling event, it notices that the request is complete. Scaling events may be performed periodically, such as every several milliseconds, every second, every several seconds, every minute, etc. The frontend server informs the regional quota server that the request is not using any of its allocated resources, and the regional quota servers restores that quota such that new requests can use it.

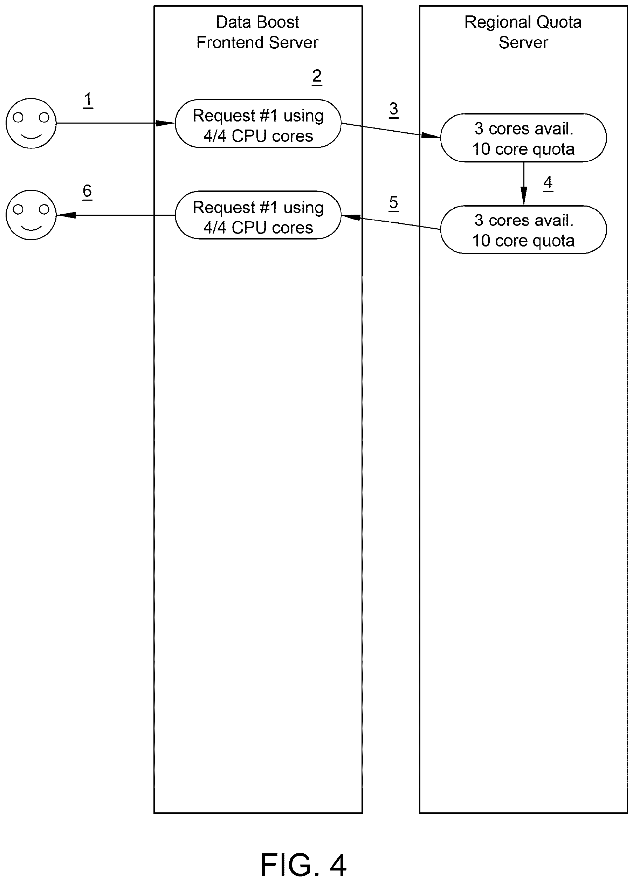

In some examples, the machine may allocate fewer than all cores to each request, and therefore run multiple requests simultaneously. For example, if the machine has 20 cores, it may allocate a limit of 4 cores per request. As such, the machine could run 5 requests simultaneously. Moreover, if each request was using fewer cores than the maximum available allotment, additional requests may be run. For example, if each request was using 2 cores instead of the allocated 4, 10 requests could be run simultaneously on the 20 core machine. Fig. 4 illustrates an example where a request is rejected as a result of insufficient available quota. In this example, the user issues a request which is received at the database frontend server. The frontend server assumes that the request is using all 4 cores that are allotted to each new request. The frontend server seeks confirmation from the regional quota server that there is sufficient quota available to let the request run. However, because only 3 cores are available and the request is allotted 4 cores, the regional quota server determines that insufficient quota is available and rejects the request. Because the request is rejected, no quota is deducted from the total available quota. The frontend server is informed, and notifies the user that the request is denied. The notification may indicate, for example, that the user should try again once their other usage in the system is done.

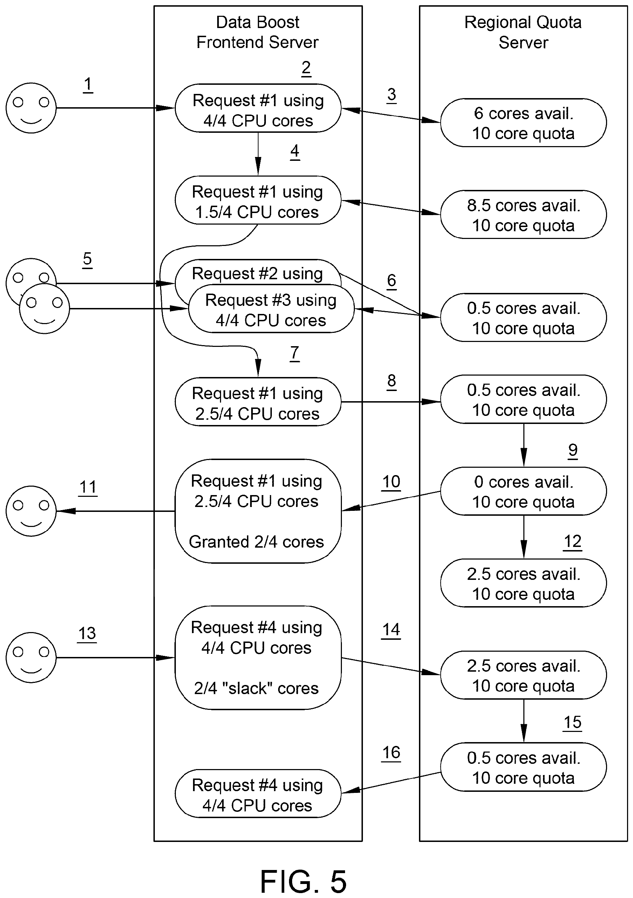

Fig. 5 illustrates an example where multiple requests for a user are received at a same time, and unused allocations from a first request can be used to serve other requests. The user issues a first request to the frontend server, which assumes the first request is using all available cores (4) allotted to new requests. The frontend server obtains confirmation from the regional quota server that the request can run, and the regional quota server approves and deducts the 4 allotted cores from the total quota for all requests, as described above in connection with Fig. 3. Over time, the frontend server scales the first request down to 1.5 cores based on its measure compute resource usage, and obtains an updated allocation from the regional quota server, which reduces the allocation for the first request to 1.5 cores and increases the total available cores for all requests to 8.5 cores. A second request and a third request are received at the frontend server, or possibly another frontend server in the same cloud region. Each of the second and third requests is allocated 4 cores, as the default allocation for all new requests. The quota server confirms the second and third requests and reduces the total cores available by 4 cores for each request. At point 7, the frontend server measures that the first request is doing more intensive work, and requests an increase from 1.5 allocated cores to 2.5 cores to accommodate the increased work. However, while the frontend server requests one additional core, only 0.5 cores are available for allocation by the regional quota server. Accordingly, the regional quota server allocated the 0.5 cores to the first request, but the first request is stopped or "evicted" because the allocated cores are insufficient, as an additional 0.5 cores were needed. The user may be notified to try the first request again once their other usage in the system is done. The 2 cores that the first request was allocated prior to eviction may be held by the frontend server as "slack" scores. At point 12, some time has passed and other requests in the system have completed, giving back 2.5 cores of quota to the regional quota server. The frontend server which rejected the first request does not yet have a scaling event. It can use the 2 slack cores from the rejected first request to partially fund new requests. Accordingly, at point 13 when a fourth request is received at the frontend server, the frontend server assumes that 4 cores are needed, but uses the 2 slack cores and only requests 2 additional cores from the regional quota server. The regional quota server, having 2.5 cores available, confirms the request and deducts 2 requested cores from the 2.5 available, leaving 0.5 remaining cores available. The regional quota server informs the frontend server, which allows the fourth request to continue.

Deciding which request is evicted when allocated cores are insufficient may be based on a stack rank of all requests on the task based on a measure of the cumulative total resource usage of the request over time, where the lowest usage request is evicted first. In some instances, the limit may be partially allocated. For example, it may be determined whether it is acceptable to allocate less than the requested limit, such as 80-100% of the requested limit.

As mentioned above, while the foregoing examples describe allocation in terms of cores, in other examples the allocations may be managed in other units of abstraction, such as tokens in a bucket, with a refill timestamp. For example, the bucket of tokens may represent available resources in the databases in a region, where each user is allocated a predetermined number of tokens. As requests are served for each user, the user's allocation can be reduced. If other users are not utilizing their tokens at a given time, the compute resources represented by those tokens can be utilized by another user. After a period of time, the buckets of tokens can be refilled. For example, the refill timestamp may be set for a period of time sufficient for the requests to be complete, such that tokens utilized by the request can be replenished.

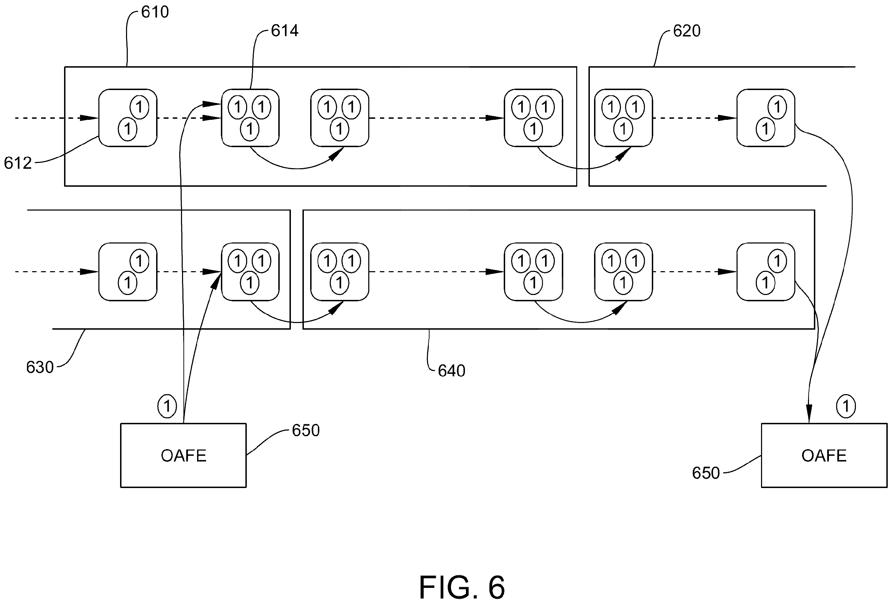

Fig. 6 illustrates an example of using tokens in a bucket to manage allocation of compute resources in a distributed database. Token buckets 610, 620, 630, 640 each extend over a length of time, referred to as an epoch. The epoch may be, for example, a number of seconds. The epoch can include a plurality of snapshots 612, 614, etc. of the buckets over the length of time. In this example, two buckets run concurrently. For example, bucket 610 runs during an overlapping time frame with bucket 630. Periodically, each bucket resets. For example, when first bucket 610 ends and second bucket 620 starts. Similarly, when bucket 630 ends, bucket 640 starts. When each bucket resets, tokens may be exchanged for like tokens in the newly started bucket. Running two buckets concurrently with identical epoch durations, but staggering reset times, prevents reconciliation. It also limits an amount of time during which tokens can be lost as a result of accounting issues. For example, if a task keeping count of tokens in memory crashes or gets rescheduled in the data center, the tokens can be lost. As requests are received at frontend server 650, the requests are allocated a predetermined number of tokens from the bucket. Multiple requests, from the same or different users, may be handled concurrently, each being allocated tokens similar to the approach described above in connection with Figs. 3-5. For example, each request can be allocated a default number of tokens, but if the frontend server 650 measures a different requirement based on resources needed to serve the request, and updated number of tokens can be requested.

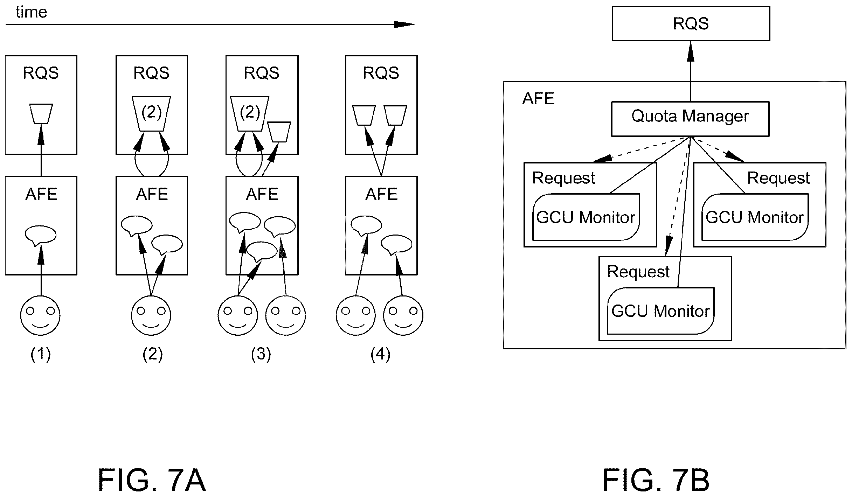

Figs. 7A-7B illustrate an example of scaling per request. Fig. 7A illustrates a token flow for this approach. When a request arrives for a user, it gets registered with the user's bucket in the regional quota server (RQS). In the RQS, new requests are treated separately, and RQS handles the link to the same user. Multiple requests to increase tokens for a user may be kept as separate increases in the request batch to RQS. Each request is modeled as a separate bucket of tokens in RQS. When a request leaves, it is removed from RQS by the application frontend (AFE) server.

Fig. 7B illustrates internal components of the system, including the AFE and RQS. When a request arrives, Quota Manager asks for more incremental tokens to accommodate the request. The Quota Manager may be a module or library inside the AFE. The amount given the request is the amount coming back from RQS. For example, the RQS may grant as much as possible up to the requested amount. If a minimum cannot be met, the request is rejected. Quota Manager provides a lease to the request, representing permission to continue execution (the request checks the status of this lease during execution). A thread is spawned on the request's scheduler, labeled as the Monitor in Fig. 7B, to track the scheduler's usage and evaluate a reasonable limit to assign to the scheduler. This monitor talks with a task-wide object (black arrows to Quota Manager) to synchronize intent with token allocation. This monitor could evaluate usage as often as needed to generate a trustworthy demand signal, and block on periodic limit adjustments from Quota Manager.

Quota Manager may contact RQS by refreshing existing tokens periodically (e.g. every 5s), or by adding or removing tokens from a request (e.g., every 1s). These two request types may fire independently, e.g. every 5s, the first and second request type fire, without consolidation. If RQS does not give enough tokens for a request to continue (e.g. the minimum allocation cannot be met), Quota Manager has a channel to revoke requests (dotted arrows), which would cancel the request execution and cancel the Monitor thread.

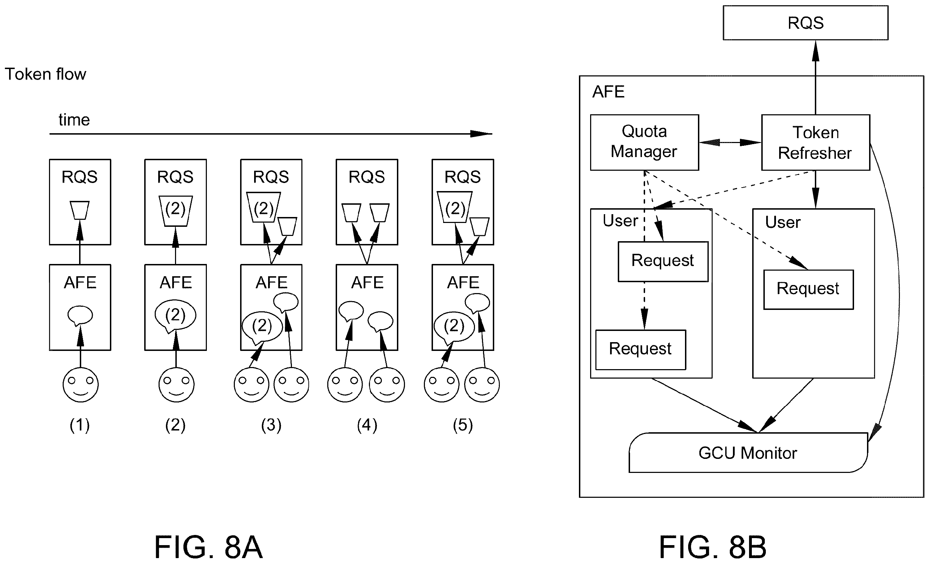

Figs. 8A-8B illustrate an example of scaling per-user. Fig. 8A illustrates the token flow. When a request arrives for a user, it is registered with the user's bucket in RQS. It may be registered in a new bucket or added to an existing bucket of tokens, which may be tracked per-user on task. New requests may be pooled on the frontend server for the same user, in tokens and scheduler. The total tokens request is in line with the total usage of requests on the machine for the user.

All requests for the user may be scaled simultaneously, with new requests admitted with incremental tokens assigned to the parent scheduler. Requests for new users establish a new scheduling / allocation space. Separate users get separate scheduling trees and separate compute unit reservations. When a request leaves, it is removed from RQS by the AFE, and the tokens are immediately returned to RQS.

Fig. 8B illustrates the internal components of the system. When a request arrives, a task-wide object, illustrated as the Quota Manager, asks a different task-wide object, here the Token Refresher, for more incremental tokens to accommodate the new request. The amount given the request is the amount coming back from RQS. If the minimum cannot be met, the request is rejected. The Quota Manager provides a lease to the request (within a user), representing permission to continue execution (the request checks the status of this lease during execution). If the user is new on the task, its scheduling tree is registered with a separate task-wide object (Monitor) to track aggregate compute usage for all requests contained in the user. The compute Monitor exposes its recommendations per user, and Token Refresher queries this set of recommendations periodically to inform the token query. Token Refresher takes the signal per user, and synchronizes it with RQS, applying the result to the user-bound scheduler (holding active requests). Token Refresher also notifies Quota Manager of the user's token amounts. Quota Manager can take this signal and determine if there are enough tokens to maintain all active requests for the user. Quota Manager determines which requests to keep / evict if it needs to, sending signals to the leases (per request) that it manages. Requests are funded in proportion to the returned tokens, some are evicted if the assigned tokens are less than the minimum. Requests are evicted based on usage and time-on-task (preferring to evict newer requests with less usage). Requests themselves operate within the user scheduler, while the user scheduler provides the signal to GCU Monitor to continue the adjustment feedback loop. Token Refresher contacts RQS by refreshing existing tokens periodically (e.g. every 5s), or by adding or removing tokens from a user (e.g. every 1s). On the 5s cadence, these requests are combined into a single request to RQS, e.g. both refresh and new token requests are combined for the user.

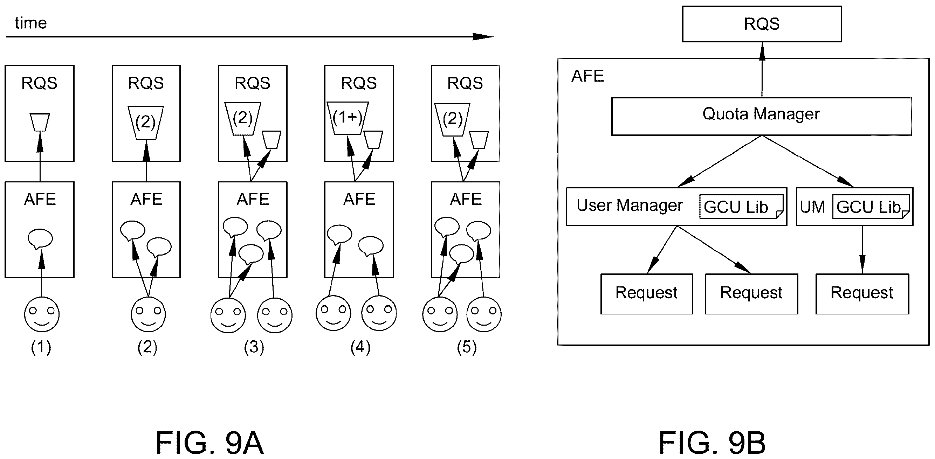

Figs. 9A-9B illustrate an example of per-request scaling with local pooling. Fig. 9A illustrates the token flow. When a request arrives for a user, it gets registered with the user's bucket in RQS. This is either registered with a new bucket in RQS, or is added to an existing bucket of tokens (tracked per-user on task). New requests are pooled on the AFE for the same user, in tokens only. When new requests are admitted, their total token usage is accumulated to the single user, but requests are treated independently during execution. Requests for new users establish a new token allocation, all requests remain on separate schedulers. When a request leaves, it is kept in RQS by the AFE for some amount of time. Returning tokens to RQS from the AFE is delayed, with the hope that the same user will return to the same AFE with more work to do. Returned tokens are handled as part of a periodic sync with RQS (e.g. during token refreshes) to minimize races. When a request arrives for a user again, its admitted with any tokens cached on task in the AFE. The AFE may request more tokens from RQS if the incremental request needs more for its initial grant (e.g. the last request left with ½ of the tokens needed for a new request).

Fig. 9B illustrates the internal components. When a request arrives, a task-wide object (Quota Manager) either creates or asks an object *per user* (User Manager / UM) to determine how many additional tokens are needed to admit the request. ∘ User Manager provides the incremental amount needed to admit the request, respecting any "cached" tokens it contains. Quota Manager asks RQS for the incremental tokens (beyond the amount cached at the User Manager). If a minimum cannot be met, the request is rejected. Quota Manager provides a lease to the request (within a user), representing permission to continue execution (the request checks the status of this lease during execution). This lease is co-owned between User Manager and the caller. Periodically, Quota Manager refreshes the tokens in the various User Manager caches. Quota Manager queries each User Manager and queries its (overall) desired usage for the requests running for the user. Each User Manager sums the recent usage history for each request in its purview to a stateless library, which provides a best-guess for a new limit. Quota Manager accumulates all user-specific quotas, and exchanges tokens with RQS. Quota Manager then distributes given tokens back to User Managers, which assigns tokens to requests, or evicts requests if there aren't enough to go around (and caches excess tokens for later). Requests are either fully funded or dropped (evicted). Requests are evicted based on usage and time-on-task (preferring to evict newer requests with less usage). User Manager elects (periodically) to give back tokens as part of the regular Quota Manager refreshes, e.g. decaying excess tokens back to the pool. This balances needing to ask for tokens back when admitting new requests, and allowing other tasks in the region to grab tokens when they are unused on-task

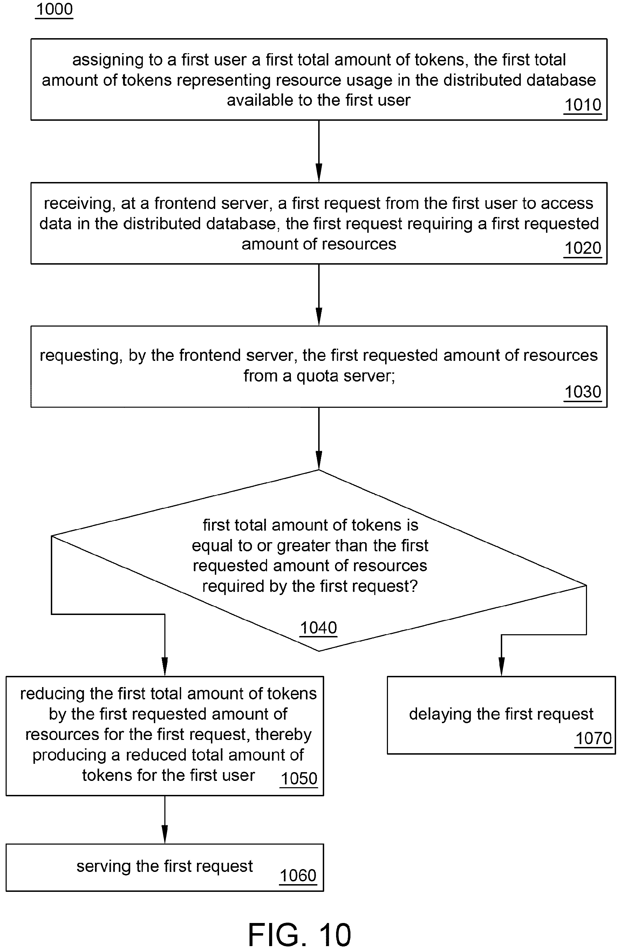

Fig. 10 illustrates an example method 1000 for allocating compute resources per request in a distributed database. The method may be executed at, for example, any device in the distributed system, such as a server, controller, load balancer, or other computing device. It should be understood that the following operations do not have to be performed in the precise order described below. Rather, various steps may be handled in a different order or simultaneously. Steps may also be added or omitted unless otherwise stated.

In block 1010, a first user is assigned a first total amount of tokens, the first total amount of tokens representing resource usage in the distributed database available to the first user.

In block 1020, a first request is received from the first user to access data in the distributed database. For example, the first request is received at the frontend server. The first request requiring a first requested amount of resources. This amount may be the default amount allocated to all new requests.

In block 1030, the first requested amount of resources is requested from a quota server.

In block 1040, it is determined whether the first total amount of tokens is equal to or greater than the first requested amount of resources required by the first request.

When the first total amount is equal or greater than the requested amount, in block 1050, the first total amount of tokens is reduced by the first requested amount of resources for the first request, thereby producing a reduced total amount of tokens for the first user. In block 1060, the first request is served.

When the first total amount of tokens is less than the first requested amount of resources required by the first request, in block 1070 the first request is delayed. For example, the first request may be rejected. A notification may be sent to the user indicating that the request was rejected and can be reattempted at a later time, such as when other requests for the user have completed.

Unless otherwise stated, the foregoing alternative examples are not mutually exclusive, but may be implemented in various combinations to achieve unique advantages. As these and other variations and combinations of the features discussed above can be utilized without departing from the subject matter defined by the claims, the foregoing description of the embodiments should be taken by way of illustration rather than by way of limitation of the subject matter defined by the claims. In addition, the provision of the examples described herein, as well as clauses phrased as "such as," "including" and the like, should not be interpreted as limiting the subject matter of the claims to the specific examples; rather, the examples are intended to illustrate only one of many possible embodiments. Further, the same reference numbers in different drawings can identify the same or similar elements.

## Claims

1. A method for allocating compute resources per user in a distributed database, the method comprising:
assigning to a first user a first total amount of tokens, the first total amount of tokens representing resource usage in the distributed database available to the first user;
receiving, at a frontend server, a first request from the first user to access data in the distributed database, the first request requiring a first requested amount of resources;
requesting, by the frontend server, the first requested amount of resources from a quota server;
when first total amount of tokens is equal to or greater than the first requested amount of resources required by the first request:
reducing the first total amount of tokens by the first requested amount of resources for the first request, thereby producing a reduced total amount of tokens for the first user; and
serving the first request; and
when the first total amount of tokens is less than the first requested amount of resources required by the first request, delaying the first request.

2. The method of claim 1, wherein delaying the first request comprising issuing a notification to the first user to retry the request at a later time.

3. The method of claim 1 or 2, further comprising:
receiving a second request from the first user during a time period when the first request is being served, the second request requiring a second requested amount of resources;
when reduced total amount of tokens is equal to or greater than the second requested amount of resources:
further reducing the reduced total amount of tokens by the second requested amount of resources for the second request; and
serving the second request; and
when the reduced total amount of tokens is less than the second requested amount of resources required by the second request, delaying the second request.

4. The method of one of claims 1 to 3, wherein each token represents resources comprising at least one of compute units, random access memory, or disk time.

5. The method of one of claims 1 to 4, further comprising evaluating, while the first request is running, an amount of allocated tokens being utilized to execute the first request.

6. The method of claim 5, further comprising:
adjusting the amount of allocated tokens based on the evaluating, the adjusting comprising reducing the amount of allocated tokens when the amount being utilized is below a threshold, and increasing the amount of allocated tokens when the amount being utilized requires a greater amount of tokens; or
evicting the first request when an amount of available tokens is insufficient to keep the first request active.

7. The method of one of claims 1 to 6, further comprising:
restoring the first total amount of tokens to a full amount after a period of time, wherein the period of time corresponds to a length of time sufficient to complete serving the first request; and/or
reevaluating token allocation at a next scaling event, wherein scaling events occur periodically.

8. A system for allocating compute resources per user in a distributed database, comprising:
one or more memories;
one or more processors in communication with the one or more memories, the one or more processors configured to:
assign to a first user a first total amount of tokens, the first total amount of tokens representing resource usage in the distributed database available to the first user;
receive a first request from the first user to access data in the distributed database, the first request requiring a first requested amount of resources;
request the first requested amount of resources from a quota server;
when first total amount of tokens is equal to or greater than the first requested amount of resources required by the first request:
reduce the first total amount of tokens by the first requested amount of resources for the first request, thereby producing a reduced total amount of tokens for the first user; and
serve the first request; and
when the first total amount of tokens is less than the first requested amount of resources required by the first request, delay the first request.

9. The system of claim 8, wherein the one or more processors comprise:
at least one frontend server configured to receive requests from users; and
at least one quota server configured to manage allocation of compute resources based on available tokens for each user;
wherein, optionally, each region of the distributed database comprises a designated quota server that manages allocation of compute resources among a plurality of datacenters in the region.

10. The system of claim 8 or 9, wherein the one or more processors are further configured to:
receive a second request from the first user during a time period when the first request is being served, the second request requiring a second requested amount of resources;
when reduced total amount of tokens is equal to or greater than the second requested amount of resources:
further reduce the reduced total amount of tokens by the second requested amount of resources for the second request; and
serve the second request; and
when the reduced total amount of tokens is less than the second requested amount of resources required by the second request, delay the second request.

11. The system of one of claims 8 to 10, wherein each token represents resources comprising at least one of compute units, random access memory, or disk time.

12. The system of one of claims 8 to 11, wherein the one or more processors are further configured to evaluate, while the first request is running, an amount of allocated tokens being utilized to execute the first request.

13. The system of claim 12, wherein the one or more processors are further configured to:
adjust the amount of allocated tokens based on the evaluating, the adjusting comprising reducing the amount of allocated tokens when the amount being utilized is below a threshold, and increasing the amount of allocated tokens when the amount being utilized requires a greater amount of tokens; or
evict the first request when an amount of available tokens is insufficient to keep the first request active.

14. The system of one of claims 8 to 13, wherein the one or more processors are further configured to:
restore the first total amount of tokens to a full amount after a period of time, wherein the period of time corresponds to a length of time sufficient to complete serving the first request; and/or
reevaluate token allocation at a next scaling event, wherein scaling events occur periodically.

15. A computer readable medium storing instructions executable by a processor for performing a method of allocating compute resources per user in a distributed database, the method comprising:
assigning to a first user a first total amount of tokens, the first total amount of tokens representing resource usage in the distributed database available to the first user;
receiving a first request from the first user to access data in the distributed database, the first request requiring a first requested amount of resources;
requesting the first requested amount of resources from a quota server;
when first total amount of tokens is equal to or greater than the first requested amount of resources required by the first request:
reducing the first total amount of tokens by the first requested amount of resources for the first request, thereby producing a reduced total amount of tokens for the first user; and
serving the first request; and
when the first total amount of tokens is less than the first requested amount of resources required by the first request, delaying the first request.
